Europäisches Patentamt

European Patent Office

Office européen des brevets

(11) Publication number: **0 353 806**
**A1**

## EUROPEAN PATENT APPLICATION

(21) Application number: **89201845.8**

(22) Date of filing: **12.07.89**

(51) Int. Cl.⁴: **A23F 5/48**

(30) Priority: **13.07.88 NL 8801777**

(43) Date of publication of application:
**07.02.90 Bulletin 90/06**

(84) Designated Contracting States:
**BE DE ES FR GB NL**

(71) Applicant: **Douwe Egberts Koninklijke Tabaksfabriek- Koffiebranderijen-Theehandel N.V.**
**Keulsekade 143**
**NL-3532 AA Utrecht(NL)**

(72) Inventor: **Hellemmons, Adrianus Cornelis Maria**
**Bergstraat 14**
**NL-3417 HW Montfoort(NL)**

(74) Representative: **Smulders, Theodorus A.H.J., Ir. et al**
**Vereenigde Octrooibureaux Nieuwe Parklaan 107**
**NL-2587 BP 's-Gravenhage(NL)**

(54) **A process for increasing the aroma content of coffee.**

(57) A process for increasing the content of aroma components in roasted coffee is described. The coffee grinder gas released as roasted coffee is being ground is subjected to such a treatment that the content of flavor components in parts by weight per unit volume is increased. The gas thus obtained is contacted with roasted coffee. In one embodiment the coffee grinder gas is increased in pressure and subsequently contacted with the coffee. Preferably, a portion of the $CO_2$ is selectively removed from the coffee grinder gas and the remaining gas is contacted with the coffee.

EP 0 353 806 A1

## A process for increasing the aroma content of coffee.

This invention relates to a process for increasing the content of aroma components, and in particular the content of volatile aroma components in roasted coffee.

During the roasting of coffee, among other components, the aroma components characteristic of roasted coffee are formed, and also a quantity of $CO_2$. The amount of $CO_2$ present in the beans is about 1.5% by weight, which $CO_2$ is enclosed within the cells of the beans under an elevated pressure. The aroma components, which for the most part are volatile, are also contained in the cells of the beans. During the grinding of the coffee, these volatiles, together with the $CO_2$ are released. Accordingly, the gas thus released, sometimes designated as coffee grinder gas, contains an amount of valuable aroma components which are characteristic of coffee.

A great deal of work has already been spent on recovering the above aroma components from the coffee grinder gas. More specifically, it has been described that these aroma components can be condensed and added in the form of a liquid coffee aroma to instant coffee or to ground and roasted coffee. European patent application 205 204 describes a complex process for the preparation of a liquid coffee aroma, which comprises first condensing the coffee grinder gas, then subjecting it to a high pressure, and finally, through a number of further operations, converting it into a liquid coffee aroma substantially free from $CO_2$. This coffee aroma can be used for aromatizing a substrate, such as ground coffee or a coffee powder.

The process described in European patent application 213 247 is comparable to the process referred to above, and in addition, coffee oil is added during one of the processing stages, so that ultimately an aromatized coffee oil is obtained, which can be combined with soluble coffee powder.

European patent application 201 698 relates to the treatment of ground coffee with a carrier gas to remove aroma components from ground coffee. The aroma components can then be removed from the carrier gas by condensation. According to European patent application 144 785, ground coffee is heated to a temperature between 30 and 95°C, whereafter the aroma components released are contacted with instant coffee.

European patent application 28 043 describes a process for aromatizing coffee, including cooling coffee grinder gases with dry ice, optionally together with the coffee. If desired, the pressure may be increased.

European patent application 41 370 also describes the condensation of coffee aroma components on coffee at cryogenic temperatures.

British patent publication 2 063 640 relates to the condensation of aroma components on ground coffee. This process, too, is based on the use of a condensate of aroma components.

The present invention relates to a process for increasing the aroma content of roasted coffee, which process is simple to perform, while a roasted coffee is obtained which produces a clearly stronger aroma perception than untreated coffee.

For this purpose, the process according to the present invention is characterized in that coffee grinder gas released during the grinding of roasted coffee is subjected to such a treatment that the content of aroma components, in parts by weight, is increased per unit volume, and that the gas thus obtained is contacted with roasted coffee.

It has surprisingly been found that this simple process is capable of considerably enhancing the aroma content of coffee, which is manifest not only upon opening a package of treated coffee, but remains perceptible for a longer period of time. It is in particular the long duration of the enhanced aroma which is surprising, because it could be expected that the aroma components. would rapidly volatilize after the coffee's coming into contact with the ambient air. It has been found, however, that this takes place so slowly that an enhanced aroma content can be noticed for a fairly long time.

In one preferred embodiment of the process according to the invention, the coffee grinder gas is increased in pressure, after which it is contacted with the coffee. This highly simple measure alone is capable of producing a coffee with a clearly enhanced content of aroma components. The pressure to which the gas is increased is preferably more than 1 bar, and specifically ranges from about 2 to about 10 bar.

According to another embodiment of the process according to this invention, the gas is treated in such a manner that the $CO_2$ present is removed at least in part from the coffee grinder gas. One example of such a treatment is a selective adsorption of $CO_2$. The essential point in the process remains, however, that after the treatment the gas is still in the gaseous form, because otherwise the positive results of the invention are not achieved.

The extent of increase in aroma content is related to the time of contact between the treated coffee grinder gas and the coffee. This period preferably ranges between 1 and 120 minutes, as within this range optimum results are obtained.

The temperature of the treated gas during the contact with the coffee is not of great importance, and is preferably selected between 0 and 65°C. A point which is of importance is that the temperature should be such that no appreciable condensation of aroma components occurs. This means, among other things, that the use of dry ice as described in European patent application 28 043 is not necessary. In addition, the present process has the advantage that no separate condensation steps for the aroma components are required.

After the treatment of the coffee with the coffee grinder gas, the coffee can be degassed. Degassing is especially needed when the coffee is packaged in a gas-tight package and more specifically when this is done under vacuum. In a number of cases, however, it is also possible to use a valved package . One feature of such a package is that coffee grinder gas released from the coffee can leave the package through a valve.

The degree of degassing depends greatly on the nature of the package. For a package which is virtually completely gas-tight, such as a vacuum package or a tin, the aim is for a gas content of the coffee to be packaged which ranges between 0.01 and 0.5% by weight. For a valved package, higher residual gas contents will suffice.

One of the surprising advantages of the process according to this invention is that it is possible for the treated coffee to be degassed without completely losing the effect of the treatment. It is true that there is some reduction in aroma content owing to the degassing treatment, but it has been found that this decrease is relatively slight, and that after degassing the coffee still has a very clearly enhanced aroma content.

The process according to the invention can be applied to both coffee beans and ground coffee. Ground coffee is preferred, because it enables the process to be performed most efficiently.

The invention also relates to roasted coffee with an enhanced content of aroma components, which coffee has been obtained using the process according to this invention, and also to a package containing such coffee. This coffee may contain a proportion of volatile aroma components that is twice as high as untreated coffee. When a package containing such coffee is opened, the consumer will perceive a clearly enhanced flavour intensity as compared with untreated coffee. A long time after the package has been first opened, there is still an enhanced flavour.

The invention is illustrated in and by the following example, which is intended to illustrate the invention and should not be construed as limiting the invention in any way.

Example

Roasted coffee beans, Red Brand type, were ground using a conventional industrial grinder. The grinder gas thereby released was collected and increased in pressure. The increased pressure was 5 bar, and as a result the proportion of aroma components in the coffee grinder gas (w/v) increased by a factor of 5.

The coffee grinder gas was contacted at a pressure of 5 bar with ground coffee, and the gas and the coffee were allowed to remain in contact for 55 minutes. Subsequently the ground coffee was degassed to a residual gas content of 0.3% by weight, and packaged in vacuum in a gas-tight foil package.

In a representative comparison by a panel of consumers, when the package thus obtained was opened, a clearly stronger characteristic coffee smell was perceived as compared with a package containing untreated coffee. After several days, there was still observed a clear difference. Both immediately after opening the package and after several days, the coffee according to this invention was clearly preferred.

**Claims**

1. A process for increasing the content of aroma components in roasted coffee, characterized in that the coffee grinder gas released as roasted coffee is being ground is subjected to such a treatment that the content of flavor components in parts by weight per unit volume is increased, and that the gas thus obtained is contacted with roasted coffee.

2. A process as claimed in claim 1, characterized in that the coffee grinder gas is increased in pressure and subsequently contacted with the coffee.

3. A process as claimed in claim 1, characterized in that a portion of the $CO_2$ is selectively removed from the coffee grinder gas and the remaining gas is contacted with the coffee.

4. A process as claimed in claim 2, characterized in that the coffee grinder gas is collected, the gas is brought to a pressure > 1 bar, preferably to a pressure of from 2 to 10 bar, and that the coffee grinder gas is contacted with the coffee at this increased pressure for some time.

5. A process as claimed in claim 4, characterized in that the coffee and the gas are contacted with each other for a period of from 1 to 120 min.

6. A process as claimed in any of claims 1-5, characterized in that the temperature of the gas during its contact with the coffee ranges between 0 and 65°C.

7. A process as claimed in any of claims 2-6, characterized in that after being contacted with the treated coffee grinder gas the coffee is degassed.

8. A process as claimed in claim 7, characterized in that the coffee is degassed to a residual gas content ranging between 0.01 and 0.5% by weight.

9. A process as claimed in any of claims 1-8, characterized in that the coffee is contacted with the coffee grinder gas in the ground form.

10. A process as claimed in any of claims 1-9, characterized in that the treatment of the coffee grinder gas is carried out under such conditions that no substantial condensation of aroma components occurs.

11. A process as claimed in any of claims 1-10, characterized in that the coffee is finally packaged in a gas-tight package.

12. Roasted coffee with an increased content of aroma components, produced using the process as claimed in any of claims 1-11.

13. A package containing coffee as claimed in claim 12.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | EP-A-0 028 043 (PROCTER & GAMBLE) * Claims 1,8,9; page 14, lines 20-31; page 16, line 26 - page 17, line 1; example 1 * | 1,2,4,5 ,9,11- 13 | A 23 F 5/48 |
| D,X | EP-A-0 041 370 (PROCTER & GAMBLE) * Claims 1,7,8,10; page 15, lines 1-11; page 15, line 28 - page 16, line 10; page 16, line 31 - page 17, line 9; example 1 * | 1,2,4,5 ,7,9,11 -13 | |
| X | FR-A-2 469 880 (GENERAL FOODS) * Claims 1,2,4; example 1 * | 1,6,9 | |
| A | FR-A-2 331 965 (SOC. DES PRODUITS NESTLE) * Claim 1; page 5, lines 16-30; example 2 * | 1,2,4 | |

TECHNICAL FIELDS SEARCHED (Int. Cl.5)

A 23 F

The present search report has been drawn up for all claims

| Place of search | Date of completion of the search | Examiner |
|---|---|---|
| THE HAGUE | 25-10-1989 | DESMEDT G.R.A. |